(19) Europäisches Patentamt / European Patent Office / Office européen des brevets

(11) **EP 2 433 148 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(21) Anmeldenummer: **10720720.1**

(22) Anmeldetag: **17.05.2010**

(51) Int Cl.:
*G01R 31/26* (2014.01)     *G01N 21/64* (2006.01)

(86) Internationale Anmeldenummer:
**PCT/EP2010/002997**

(87) Internationale Veröffentlichungsnummer:
**WO 2010/133325 (25.11.2010 Gazette 2010/47)**

(54) **VERFAHREN ZUR ORTSAUFGELÖSTEN BESTIMMUNG DES SERIENWIDERSTANDES EINER HALBLEITERSTRUKTUR**

METHOD FOR SPATIALLY RESOLVING SERIES RESISTANCE OF A SEMICONDUCTOR STRUCTURE

PROCÉDÉ POUR DÉTERMINER SPATIALEMENT LA RÉSISTANCE SÉRIE D'UNE STRUCTURE SEMI-CONDUCTRICE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.05.2009 DE 102009021799**

(43) Veröffentlichungstag der Anmeldung:
**28.03.2012 Patentblatt 2012/13**

(73) Patentinhaber:
• **Fraunhofer-Gesellschaft zur Förderung der angewandten Forschung e.V.**
  **80686 München (DE)**
• **Albert-Ludwigs-Universität Freiburg**
  **79098 Freiburg (DE)**

(72) Erfinder:
• **HAUNSCHILD, Jonas**
  **79115 Freiburg (DE)**
• **GLATTHAAR, Markus**
  **79104 Freiburg (DE)**
• **REIN, Stefan**
  **79211 Denzlingen (DE)**

(56) Entgegenhaltungen:
**WO-A1-2007/128060**

• TRUPKE T ET AL: "Spatially resolved series resistance of silicon solar cells obtained from luminescence imaging" APPLIED PHYSICS LETTERS, AIP, AMERICAN INSTITUTE OF PHYSICS, MELVILLE, NY, US LNKD-DOI:10.1063/1.2709630, Bd. 90, Nr. 9, 28. Februar 2007 (2007-02-28), Seiten 93506-093506, XP012096301 ISSN: 0003-6951 in der Anmeldung erwähnt
• KAMPWERTH H ET AL: "Advanced luminescence based effective series resistance imaging of silicon solar cells" APPLIED PHYSICS LETTERS, AIP, AMERICAN INSTITUTE OF PHYSICS, MELVILLE, NY, US LNKD-DOI:10.1063/1.2982588, Bd. 93, Nr. 20, 18. November 2008 (2008-11-18), Seiten 202102-202102, XP012112531 ISSN: 0003-6951
• RAMSPECK K ET AL: "Recombination current and series resistance imaging of solar cells by combined luminescence and lock-in thermography" APPLIED PHYSICS LETTERS, AIP, AMERICAN INSTITUTE OF PHYSICS, MELVILLE, NY, US LNKD-DOI:10.1063/1.2721138, Bd. 90, Nr. 15, 9. April 2007 (2007-04-09) , Seiten 153502-153502, XP012094133 ISSN: 0003-6951

EP 2 433 148 B1

**(Forts. nächste Seite)**

- MICHL B., KASEMANN M., GIESECKE J. ET.AL.: "Application of Luminescence Imaging based Series Resistance Measurements Methods in an Industrial Environment" PROCEEDINGS OF THE 23RD EUROPEAN PHOTOVOLTAIC SOLAR ENERGY CONFERENCE AND EXHIBITION 5. September 2008 (2008-09-05), Seiten 1-6, XP002603257 Valencia, Spain Gefunden im Internet: URL:http://www.ise.fraunhofer.de/veroeffen tlichungen/nach-jahrgaengen/2008/veroeffen tlichungen/application-of-luminescence-ima ging-based-series-resistance-measurements- methods-in-an-industrial-environment/at_do wnload/file [gefunden am 2010-09-29]

- PYSCH ET AL: "A review and comparison of different methods to determine the series resistance of solar cells" SOLAR ENERGY MATERIALS AND SOLAR CELLS, ELSEVIER SCIENCE PUBLISHERS, AMSTERDAM, NL LNKD- DOI:10.1016/J.SOLMAT.2007.05.026, Bd. 91, Nr. 18, 30. August 2007 (2007-08-30), Seiten 1698-1706, XP022223139 ISSN: 0927-0248 in der Anmeldung erwähnt

## Beschreibung

Die Erfindung betrifft ein Verfahren zur ortsaufgelösten Bestimmung des Serienwiderstandes einer Halbleiterstruktur gemäß Oberbegriff des Anspruchs 1, wobei die Halbleiterstruktur eine Solarzelle oder eine Vorstufe bei der Herstellung einer Solarzelle ist, umfassend mindestens einen pn-Übergang und Kontakte zur elektrischen Kontaktierung.

Der Serienwiderstand stellt eine wesentliche Größe zur Charakterisierung einer Solarzelle dar, denn ein hoher Serienwiderstand führt typischerweise zu einer Verringerung des Wirkungsgrades der Solarzelle. Der Gesamtserienwiderstand einer Solarzelle setzt sich hierbei aus mehreren Anteilen zusammen, beispielsweise können der Querleitungswiderstand einer metallischen Kontaktierungsstruktur, der Querleitungswiderstand einer Dotierungsschicht wie beispielsweise einer Emitterschicht und/oder der Kontaktwiderstand zwischen metallischer Kontaktstruktur und der Dotierungsschicht wesentlich zu dem Gesamtserienwiderstand beitragen.

Zur Charakterisierung einer Solarzelle sowie zur Prozesskontrolle bei der Herstellung einer Solarzelle ist es wünschenswert, den Serienwiderstand der Solarzelle ortsaufgelöst zu bestimmen, d. h. für mehrere Ortspunkte den jeweils lokalen Serienwiderstand zu ermitteln. Durch die Verteilung der lokalen Serienwiderstände sind Rückschlüsse auf örtlich inhomogene Prozessbedingungen oder fehlerhafte Elemente wie unterbrochene Metallisierungsstrukturen möglich.

Es sind mehrere Messverfahren zur ortsaufgelösten Bestimmung des Serienwiderstandes bekannt wobei sich insbesondere die ortsaufgelöste Messung von in der Solarzelle erzeugter Lumineszenzstrahlung für solche Messverfahren eignet. Es ist bereits bekannt, mittels einer CCD-Kamera ortsaufgelöst die von einer Oberfläche der Solarzelle ausgehende Lumineszenzstrahlung zu vermessen und hieraus ortsausgelöst den Serienwiderstand zu bestimmen:

In T. Trupke, E. Pink, R. A. Bardos, and M. D: Abbott "Spatially resolved series resistance of silicon solar cells obtained from luminescence imaging", Applied Physics Letters 90, 093506 (2007) wird ein Verfahren beschrieben, bei dem durch Beleuchtung der Solarzelle in an sich bekannter Weise Lumineszenzstrahlung erzeugt wird und diese so genannte Photolumineszenzstrahlung mittels einer CCD-Kamera ortsaufgelöst gemessen wird. Hierbei werden zwei Bilder der Photolumineszenzstrahlung unter verschiedenen Messbedingungen aufgenommen, wobei bei einer Messbedingung A Offenklemmbedingungen vorliegen (d.h. kein Stromfluss zwischen den Kontakten) und bei einer Messbedingung B Strom aus der Solarzelle entnommen wird. Zusätzlich ist mindestens ein drittes Bild der Photolumineszenzstrahlung unter Kurzschlussbedingungen erforderlich, zur Messwertbereinigung der beiden zuvor genannten Bilder.

Aus dem unter Messbedingung A aufgenommenen Messbild werden ortsaufgelöste Kalibrierungsparameter $C_i$ bestimmt, wobei für jeden Ortspunkt $i$ jeweils ein Kalibrierungsparameter ermittelt wird. Mittels dieser Kalibrierungsparameter erfolgt eine Umrechung der unter Messbedingung B gemessenen lokalen Intensitäten der Lumineszenzstrahlung in eine lokal an den jeweiligen Ortpunkt der Solarzelle anliegende Spannung.

Unter der Voraussetzung, dass für die gesamte Solarzelle ein einheitlicher Wert für einen Dunkelsättigungsstrom angenommen werden kann, ist unter Verwendung des an sich bekannten Eindiodenmodels als Näherung zur Modellierung der lokalen elektrischen Eigenschaften der Solarzelle die Bestimmung der lokalen Serienwiderstände möglich.

Bei typischen industriell hergestellten Solarzellen, insbesondere bei Solarzellen aus multikristallinem Silizium kann jedoch nicht von einem örtlich homogenen Dunkelsättigungsstrom ausgegangen werden. Zur quantitativen Bestimmung der lokalen Serienwiderstände ist bei solchen Solarzellen daher zusätzlich eine ortsaufgelöste Bestimmung des Dunkelsättigungsstromes notwendig.

Hierfür sind üblicherweise weitere Messungen der Photolumineszenz unter anderen Messbedingungen, wie beispielsweise Beaufschlagung der Solarzelle mit elektromagnetischer Strahlung unterschiedlicher Wellenlängen notwendig.

Der Erfindung liegt daher die Aufgabe zugrunde, das Messverfahren zur ortsaufgelösten Bestimmung des Serienwiderstandes einer Halbleiterstruktur dahingehend zu verbessern, dass die Anzahl der notwendigen Messbilder reduziert wird und/oder die notwendige Gesamtdauer zur ortsaufgelösten Bestimmung des Serienwiderstandes verringert wird. Weiterhin soll sich das erfindungsgemäße Messverfahren zum Einsatz in Inline-Messplätzen in einer Produktionslinie für Solarzellen eignen.

Gelöst ist diese Aufgabe durch ein Verfahren zur ortsaufgelösten Bestimmung des Serienwiderstandes einer Halbleiterstruktur gemäß Anspruch 1. Vorteilhafte Ausgestaltungen des erfindungsgemäßen Verfahrens finden sich in den Ansprüchen 2 bis 10.

Mit dem erfindungsgemäßen Verfahren werden ortsaufgelöst Serienwiderstände einer Halbleiterstruktur bestimmt, wobei die Halbleiterstruktur eine Solarzelle oder einer Vorstufe bei der Herstellung einer Solarzelle ist. Die Halbleiterstruktur umfasst mindestens einen pn-Übergang und Kontakte zur elektrischen Kontaktierung.

Das Verfahren umfasst folgende Verfahrensschritte:

In einem Schritt A wird unter einer Messbedingung A Lumineszenzstrahlung in der Halbleiterstruktur erzeugt, wobei zwischen den Kontakten der Halbleiterstruktur eine elektrische Spannung $V_A$ besteht. Für mehrere Ortspunkte $i$ der Halbleiterstruktur wird die lokale Intensität $I_{LA,i}$ der von diesem Ortspunkt ausgehenden Lumineszenzstrahlung gemessen.

In einem Schritt B wird Lumineszenzstrahlung in der Halbleiterstruktur unter einer Messbedingung B erzeugt, wobei zwischen den Kontakten der Halbleiterstruktur eine elektrische Spannung $V_B$ besteht. Die Messbedingung B unterscheidet sich dadurch von der Messbedingung A, dass bei Messbedingung B ein größerer Strom zwischen den Kontakten der Halbleiterstruktur fließt als bei der Messbedingung A. Analog zu Schritt A erfolgt auch in Schritt B für mehrere Ortspunkte eine Messung der jeweils lokalen Intensität $I_{LB,i}$ der von diesem Ortspunkt der Halbleiterstruktur ausgehenden Lumineszenzstrahlung.

In einem Schritt C wird für mehrere vorgegebene Ortspunkte der Halbleiterstruktur jeweils ein lokaler Kalibrierungsparameter $C_{V,i}$ für einen vorgegebenen mathematischen Zusammenhang zwischen der lokalen Intensität der Lumineszenzstrahlung und der lokal an dem Halbleiterelement anliegenden Spannung an dem jeweiligen Ortspunkt bestimmt. Die Bestimmung der Kalibrierungsparameter $\boldsymbol{C_{V,i}}$ erfolgt hierbei zumindest abhängig von den in Schritt A gemessenen Intensitäten $I_{LA,i}$ und der bei Messbedingung A zwischen den Kontakten der Halbleiterstruktur bestehenden Spannung $V_A$.

Schließlich erfolgt in einem Schritt D die Bestimmung von lokalen Serienwiderständen $R_{S,i}$ für mehrere vorgegebene Ortspunkte der Halbleiterstruktur. Die Bestimmung erfolgt jeweils zumindest abhängig von mindestens einer in Schritt B gemessenen lokalen Intensität $I_{LB,i}$ der Lumineszenzstrahlung und mindestens einem in Schritt C bestimmten Kalibrierungsparamter $C_{V,i}$.

Wesentlich ist, dass in Schritt D die lokalen Serienwiderstände $R_{S,i}$ jeweils zusätzlich abhängig von einem für alle lokalen Serienwiderstände identisch vorgegebenen globalen Serienwiderstand $R_{Sg}$ der Halbleiterstrukur bestimmt werden.

Im Gegensatz zu den vorbekannten Messverfahren, bei denen zusätzliche Messungen der Lumineszenzstrahlung zur Bestimmung der lokalen Serienwiderstände in Schritt D notwendig sind, wird bei dem erfindungsgemäßen Messverfahren zur Bestimmung der lokalen Serienwiderstände zusätzlich der globale Serienwiderstand der Halbleiterstruktur verwendet. Hierdurch ist eine Reduzierung der notwendigen Messungen der Lumineszenzstrahlung möglich und entsprechend eine Reduzierung der für die Gesamtmessung erforderlichen Messdauer.

Diese Reduzierung ermöglicht insbesondere die Verwendung des erfindungsgemäßen Verfahrens in bereits vorhandenen Inline-Messvorrichtungen, bei denen während des Herstellungsprozesses eine Vermessung der Halbleiterstrukturen erfolgt.

Bei dem erfindungsgemäßen Messverfahren wird somit die notwendige Zusatzinformation in Schritt D zur Bestimmung der lokalen Serienwiderstände nicht über zusätzliche Messungen der Lumineszenzstrahlung erhalten, sondern durch einen vorgegebenen globalen Serienwiderstand der Halbleiterstruktur. Der globale Serienwiderstand der Halbleiterstrukur ist vergleichsweise einfach bestimmbar. Hierfür stehen unterschiedliche aus dem Stand der Technik bekannte Messmethoden zur Verfügung:

Beispielsweise kann der Serienwiderstand aus der Dunkel- oder Hellkennlinie der Halbleiterstruktur oder aus einer Kombination von Dunkel- und Hellkennlinie der Halbleiterstruktur in an sich bekannter Weise bestimmt werden (siehe D. Pysch, A. Mette, and S. W. Glunz, Solar Energy Materials & Solar Cells 91, 1698-706 (2007), und A. G. Aberle, S. R. Wenham, and M. A. Green, in A new method for accurate measurements of the lumped series resistance of solar cells, Louisville, Kentucky, USA, 1993 (IEEE; New York, NY, USA), p. 133-9). Ebenso ist die Berechnung des globalen Serienwiderstandes anhand von Kenndaten der Halbleiterstruktur wie beispielsweise Größenabmessungen der Metallisierungsstrukturen, Größenabmessungen der Dotierschichten und Dotierprofile bzw. Schichtwiderstände der Dotierschichten möglich.

Ein weiterer Vorteil der Verwendung des globalen Serienwiderstandes zur Bestimmung der lokalen Serienwiderstände ist, dass typischerweise in einer Prozesslinie die Schwankung des globalen Serienwiderstandes zwischen den einzelnen Halbleiterstrukturen wesentlich geringer ist, als die Schwankung der lokalen Serienwiderstände auf einer Halbleiterstruktur. Es ist somit nicht zwingend notwendig, für jede Halbleiterstruktur individuell den globalen Serienwiderstand zu bestimmen. Ebenso ist die Verwendung eines für die Halbleiterstruktur typischen globalen Serienwiderstandes möglich.

Untersuchungen des Anmelders haben ergeben, dass die Bestimmung der lokalen Serienwiderstände abhängig von dem globalen Serienwiderstand derart erfolgt, dass die lokalen Serienwiderstände $R_{S,i}$ jeweils mit einem für alle lokalen Serienwiderstände identischen globalen Skalierungsfaktor f skaliert werden. Der globale Skalierungsfaktor f wird derart bestimmt, dass die lokalen Serienwiderstände $R_{S,i}$ ein vorgegebenes mathematisches Verhältnis zu dem globalen Serienwiderstand $R_{Sg}$ aufweisen.

Dieses vorgegebene mathematische Verhältnis ist vorzugsweise ein vorgegebenes Mittlungsverfahren der lokalen Serienwiderstände $R_{S,i}$, sodass der resultierende Mittelwert der skalierten lokalen Serienwiderstände $R_{S,i}$ gleich dem globalen Serienwiderstand $R_{Sg}$ ist. Hierbei zeigten Untersuchungen des Anmelders, dass vorzugsweise das arithmetische Mittel als Mittlungsverfahren verwendet wird.

Das erfindungsgemäße Verfahren ist sowohl bei Erzeugung der Lumineszenzstrahlung durch Beaufschlagung der Halbleiterstruktur mit elektromagnetischer Strahlung (d. h. Erzeugung von Photolumineszenzstrahlung) als auch bei

EP 2 433 148 B1

Erzeugung der Lumineszenzstrahlung durch Anlegen einer Spannung an den Kontakten der Halbleiterstruktur (d. h. Erzeugung von Elektrolumineszenzstrahlung) anwendbar.

Bei der Erzeugung von Photolumineszenzstrahlung kann z.B. bei Messbedinung A auf eine Kontaktierung der Halbleiterstruktur verzichtet werden. In diesem Fall ergibt sich die an den Kontakten anliegende Spannung $V_A$ aufgrund der Beleuchtungsbedingungen und es fließt kein Strom zwischen den Kontakten. Bei Messbedingung B ist eine Kontaktierung notwendig, um einen vorgegebenen Stromfluss zwischen den Kontakten bei einer entsprechend anliegenden Spannung $V_B$ zu erzeugen. Auch in diesem Fall fließt somit unter Messbedinung B ein größerer Strom als bei Messbedingung A. Bei der Erzeugung von Photolumineszenzstrahlung ergibt sich jedoch der Nachteil, dass die zur Anregung verwendete elektromagnetische Strahlung nicht als Photolumineszenzzenzstrahlung detektiert werden darf, so dass aufwendige optische Filter zum Ausblenden der Anregungsstrahlung bei der verwendeten Detektionseinheit wie beispielsweise einer CCD-Kamera notwendig sind. Auf solche optische Filter kann bei Ausgestaltung des Verfahrens als Elektrolumineszenzverfahren verzichtet werden.

Vorteilhafterweise wird daher bei Messbedingung A die Halbleiterstruktur an den elektrischen Kontakten mit der Spannung $V_A$ und bei Messbedingung B mit der Spannung $V_B$ beaufschlagt. Bei beiden Messbedingungen wird die Halbleiterstruktur nicht oder nur geringfügig mit elektromagnetischer Strahlung beaufschlagt. Vorzugsweise erfolgt die Messung somit im Dunkeln. Jedoch ist auch eine geringfügige Beleuchtung der Halbleiterstruktur möglich, sofern die Messbedingungen, d. h. insbesondere die Ladungsträgerverteilung in der Halbleiterstruktur im Wesentlichen durch die anliegende Spannung und nicht durch die Beleuchtung bestimmt werden.

Bei der vorteilhaften Ausgestaltung des erfindungsgemäßen Verfahrens als Elektrolumineszenzverfahren ist $V_A$ kleiner als $V_B$, so dass unter Messbedingung A ein geringerer Strom zwischen den Kontakten der Halbleiterstruktur fließt, verglichen mit Messbedingung B.

Der Hintergrund hierfür ist, dass unter Messbedingung A der Einfluss der lokalen Serienwiderstände auf das Stromflussmuster in der Halbleiterstruktur möglichst gering sein soll. Denn wie zuvor beschrieben, wird die Messung der Lumineszenzstrahlung unter Messbedingung A zur Ermittlung der lokalen Kalibrierungsparameter $C_{V,i}$, verwendet, wobei kein oder nur ein geringer Einfluss der lokalen Serienwiderstände auf die ermittelten Kalibrierungsparameter erwünscht ist.

Ebenso führt eine geringe elektrische Spannung $V_A$ und entsprechend ein geringer Stromfluss zwischen den Kontakten der Halbleiterstruktur bei Messbedingung A jedoch zu geringeren Intensitäten der lokalem Lumineszenzstrahlung, verglichen mit Messbedingung B. Messbedingung A wird vorteilhafterweise daher derart gewählt, dass einerseits der Einfluss der lokalen Serienwiderstände gering ist, andererseits jedoch eine möglichst große Intensität der erzeugten Lumineszenzstrahlung erzielt wird, um die notwendige Messzeit zur ortsaufgelösten Detektion der Lumineszenzstrahlung gering zu halten.

Vorzugsweise fließt bei Messbedingung A daher ein Strom zwischen den Kontakten der Halbleiterstruktur, der weniger als 30 %, vorzugsweise weniger als 20 %, im Weiteren vorzugsweise weniger als 15 % des unter Normbetrieb der Halbleiterstruktur fließenden Stromes beträgt.

Normbetrieb bezeichnet hierbei die Standardtestbedingung, für welche die Halbleiterstruktur ausgebildet ist. Dies beträgt bei handelsüblichen Solarzellen für die Außenanwendung typischerweise eine Beaufschlagung der Solarzelle mit elektromagnetischer Strahlung des Normspektrums AM1.5G mit einer Gesamtleistung von 1000 W/m$^2$ beleuchteter Fläche. Untersuchungen des Anmelders haben ergeben, dass eine Messbedingung A, bei der etwa 20 % des Kurzschlussstromes unter Normbedingungen fließen, eine gute Optimierung zwischen geringem Einfluss der lokalen Serienwiderstände einerseits und hoher Intensität der erzeugten Lumineszenzstrahlung andererseits bewirkt.

Bei Messbedingung B ist es hingegen notwendig, dass sich der Einfluss der lokalen Serienwiderstände in der erzeugten Lumineszenzstrahlung zeigt. Daher fließt vorteilhafterweise bei Messbedingung B ein Strom zwischen den Kontakten der Halbleiterstruktur, der mindestens 50 %, vorzugsweise mindestens 70 %, im Weiteren vorzugsweise in etwa 100 % des unter Normbedingung der Halbleiterstruktur fließenden Kurzschlussstromes beträgt. Insbesondere ist es vorteilhaft, wenn die Offenklemmspannung unter Normbedingungen ($V_{oc}$) bei Messbedingung B an die Halbleiterstruktur angelegt wird.

Wie zuvor beschrieben, ist die Intensität der erzeugten Lumineszenzstrahlung bei Messbedingung A geringer als bei Messbedingung B. Vorteilhafterweise ist die Messzeit zur ortsaufgelösten Messung der Lumineszenzstrahlung daher in Schritt A mindestens um einen Faktor 3, vorzugsweise etwa um einen Faktor 5 größer als die Messzeit bei der Messung der Intensität der Lumineszenzstrahlung in Schritt B.

Bei typischen Halbleitersolarzeilen insbesondere Solarzellen aus multikristallinem Silizium und Verwendung einer üblichen CCD-Kamera zur Detektion der Lumineszenzstrahlung ist bei Messbedingung A eine Messdauer unter 0,5 Sekunden und bei Messbedingung B eine Messdauer unter 0,1 Sekunden möglich.

Der Zusammenhang zwischen der lokal an der Halbleiterstruktur anliegenden Spannung und der durch diese anliegende Spannung lokal erzeugten Lumineszenzstrahlung kann näherungsweise als exponentieller Zusammenhang beschrieben werden. Vorteilhafterweise ist daher in Schritt C ein exponentieller Zusammenhang zwischen der Intensität der lokalen Lumineszenzstrahlung $I_{LA,i}$ und der Spannung $V_A$ vorgegeben, insbesondere vorzugsweise gemäß Formel 1:

$$I_{LA,i} = C_{V,i}\, \mathrm{exp}\!\left(\frac{V_A}{V_T}\right) \qquad \text{(Formel 1)},$$

mit dem in Schritt C zu bestimmenden lokalen Kalibrierungsparametern $C_{V,i}$ und der thermischen Spannung $V_T$.

In dieser vorteilhaften Ausgestaltung ist somit mittels des lokalen Kalibrierungsparameters eine Umrechung der Intensität der gemessenen Lumineszenzstrahlung in eine lokal anliegende Spannung möglich.

Vorteihafterweise wird in Schritt D jeder lokale Serienwiderstand gemäß Formel 2

$$\ddot{R}_{S,i} = \frac{V_B - V_i}{j_i} \qquad \text{(Formel 2)}$$

bestimmt, mit einer lokalen an der Halbleiterstruktur anliegenden Spannung $V_i$ und einer lokalen in diesem Bereich der Halbleiterstruktur fließenden Stromdichte $j_i$. Hierbei wird die lokale Spannung abhängig zumindest von der in Schritt B gemessenen lokalen Intensität $I_{B,i}$ und den in Schritt B bestimmten lokalen Kalibrierungsparameter $C_{V,i}$, bestimmt, vorzugsweise gemäß der zuvor genannten Formel 1.

Die lokale Stromdichte $j_i$ wird vorzugsweise gemäß Formel 3

$$j_i = j_{o,i}\, \exp\!\left(\frac{V_i}{V_T}\right) \qquad \text{(Formel 3)}$$

bestimmt, mit der lokalen Spannung $V_i$, der thermischen Spannung $V_T$ und der lokalen Dunkelsättigungsstromdichte $j_{0,i}$.

Die lokale Dunkelsättigungsstromdichte $j_{0,i}$ wird vorzugsweise gemäß Formel 4

$$j_{0,i} = \frac{f}{C_{V,i}} \qquad \text{(Formel 4)}$$

Bestimmt, mit dem lokalen Kalibrierungsparameter $C_{V,i}$ und dem zuvor genannten globalen Skalierungsfaktor f. Der globale Skalierungsfaktor f wird hierbei derart bestimmt, dass die lokalen Serienwiderstände $R_{S,i}$ ein vorgegebenes mathematisches Verhältnis zu dem globalen Serienwiderstand $R_{Sg}$ aufweisen, vorzugsweise, dass das arithmetische Mittel der skalierten lokalen Serienwiderstände dem globalen Serienwiderstand entspricht.

In dieser vorzugsweisen Ausgestaltung erfolgt somit eine Skalierung der lokalen Serienwiderstände über eine Skalierung der lokalen Dunkelsättigungsstromdichten unter der Bedingung, dass das arithmetische Mittel der lokalen Serienwiderstände dem globalen Serienwiderstand entspricht. Durch diese Skalierung kann auf weitere Messungen, insbesondere weitere Messungen der ortsaufgelösten Lumineszenzstrahlung zur quantitativen Ermittlung der lokalen Serienwiderstände verzichtet werden.

Bei Ausgestaltung des erfindungsgemäßen Verfahrens als Elektrolumineszenzverfahren ist somit die Bestimmung der lokalen Serienwiderstände quantitativ möglich, wobei lediglich unter zwei Messbedingungen jeweils eine Messung der lokalen Lumineszenzstrahlung notwendig ist und zusätzlich die Vorgabe eines globalen Serienwiderstandes der Halbleiterstruktur.

Zur Erhöhung der Messgenauigkeit ist es vorteilhaft, dass in Schritt A zusätzlich mindestens ein Erzeugen von Lumineszenzstrahlung in der Halbleiterstruktur unter einer zweiten Messbedingung A' erfolgt, bei welcher zwischen den Kontakten der Halbleiterstruktur eine elektrische Spannung $V_A'$ besteht und für mehrere Ortspunkte der Halbleiterstruktur jeweils eine lokale Intensität $I_{LA,i}'$ der von diesem Ortspunkt ausgehenden Lumineszenzstrahlung gemessen wird. Bei Messbedingung A' fließt ein zu Messbedingung A unterschiedlicher Strom zwischen den Kontakten der Halbleiterstruktur und in Schritt C ist ein exponentieller Zusammenhang zwischen der Intensität der lokalen Lumineszenzstrahlung $I_{LA,i}$ und der Spannung $V_A$ gemäß Formel 5 vorgegeben:

$$I_{LA,i} = C_{V,i}\, \mathrm{exp}\!\left(\frac{V_A}{m_{V,i}\cdot V_T}\right) \qquad \text{(Formel 5)},$$

mit der thermischen Spannung $V_T$, den lokalen Kalibrierungsparametern $C_{V,i}$ und $m_{V,i}$. Entsprechend werden in Schritt C die lokalen Kalibrierungsparameter $C_{V,i}$ und $m_{V,i}$ abhängig von den gemessenen Intensitäten $I_{LA,i}$ und $I_{LA,i}'$ bestimmt und in Schritt D werden die lokalen Serienwiderstände $R_{S,i}$ jeweils zusätzlich abhängig von dem lokalen Kalibrierungsparameter $m_{V,i}$ bestimmt.

In dieser vorzugsweisen Ausführungsform wird für den mathematischen Zusammenhang zwischen der lokal an der Halbleiterstruktur anliegenden Spannung und der der Intensität der in diesem Bereich der Halbleiterstruktur erzeugten Lumineszenzstrahlung somit nicht ein einfacherer exponentieller Zusammenhang gemäß Formel 1 angenommen, sondern ein exponentieller Zusammenhang, der zusätzlich einen lokalen Idealitätsfaktor $m_{V,i}$ aufweist. Entsprechend sind zwei Messungen (eine Messung unter Messbedingung A und eine Messung unter Messbedingung A') der Intensitäten der lokalen Lumineszenzstrahlung zur Bestimmung der beiden Kalibrierungsparameter für jeden Ortspunkt notwendig.

Der zusätzliche Aufwand einer weiteren Messung erhöht die Genauigkeit bei der Auswertung durch den zusätzlichen Kalibrierungsparameter $m_{V,i}$.

Ebenso liegt es im Rahmen der Erfindung, für den mathematischen Zusammenhang zwischen der Intensität der lokalen Lumineszenzstrahlung und der lokal anliegenden Spannung weitere mathematische Modelle mit zusätzlichen Kalibrierungsparametern anzunehmen und entsprechend in Schritt A zusätzliche Messungen der lokalen Lumineszenzintensitäten unter weiteren Messbedingungen vorzunehmen, um auch die weiteren Kalibrierungsparameter zu bestimmen.

Untersuchungen des Anmelders haben jedoch gezeigt, dass bereits bei Verwendung von Formel 1, d. h. Bestimmung lediglich eines lokalen Kalibrierungsparameters $C_{V,i}$ für jeden Ortspunkt eine hinreichende Genauigkeit für typische Halbleiterstrukturen erzielt wird.

Vorzugsweise sind in den Schritten A, B, C und D jeweils die identischen Ortspunkte vorgegeben. Hierdurch wird somit für jeden vorgegebenen Ortspunkt i eine Intensität $I_{LA,i}$, eine Intensität $I_{LB,i}$, ein lokaler Kalibrierungsparameter $C_{V,i}$ und entsprechend ein lokaler Serienwiderstand $R_{S,i}$ bestimmt, wobei für jeden Ortspunkt die Bestimmung des lokalen Serienwiderstandes unabhängig von den entsprechenden Messwerten oder Parametern der anderen Ortspunkte ist. Ebenso liegt es jedoch im Rahmen der Erfindung, für einzelne Verfahrensschritte unterschiedliche Ortspunkte vorzugeben und bei der Auswertung in Schritt D für jeden Ortspunkt, für den ein lokaler Serienwiderstand $R_{S,i}$ bestimmt werden soll, eine Mittelung der im Umfeld dieses Ortspunkt gemessenen Messwerte bzw. Kalibrierungsparameter vorzunehmen.

Vorzugsweise sind die vorgegebenen Ortspunkte in etwa gleichmäßig über eine Oberfläche der Halbleiterstruktur, vorzugsweise die Vorderseite der Halbleiterstruktur, verteilt.

Insbesondere bei Verwendung von CCD-Kameras zur Messung der Lumineszenzstrahlung werden vorteilhafterweise solche Kameras verwendet, welche einen Chip mit einem quadratischen oder rechteckigen Raster von Pixeln aufweisen, wo bei jedem Pixel über ein Objektiv ein Ortspunkt auf der Messseite 1a des Siliziumwafers zugeordnet ist und somit die vorgegebenen Ortspunkte ebenfalls auf einem rechtwinkligen oder quadratischen Raster auf der Halbleiterstruktur angeordnet sind.

Vorzugsweise erfolgt die Durchführung des erfindungsgemäßen Verfahrens an einer Vielzahl von Ortspunkten, um eine örtlich ausreichend aufgelöste Information hinsichtlich der lokalen Serienwiderstände zu erhalten. Vorzugsweise werden die Verfahrensschritte B, C und D an mindestens 1.000,00, vorzugsweise mindestens 20.000,00, im Weiteren bevorzugt mindestens 100.000,00 verschiedenen Ortspunkten durchgeführt. Die Ortspunkte weisen vorzugsweise einen Abstand von mindestens 0,1 mm, vorzugsweise mindestens 0,3 mm, bevorzugt mindestens 1 mm auf. Vorzugsweise sind die Ortspunkte auf einem rechtwinkligen Gitter, bevorzugt einen quadratischen Gitter angeordnet. Wie zuvor beschrieben, ist insbesondere die Verwendung einer CCD-Kamera vorteilhaft. Bevorzugt werden sämtliche Messpunkte der Kamera zur Durchführung der Verfahrensschritte B, C und D verwendet. Typische CCD-Kameras weisen eine Auflösung von mindestens 250.000,00 Punkten auf, die auf einem quadratischen Gitter (mindestens 512 Punkte X 512 Punkte) angeordnet sind. Vorzugsweise sind die Ortspunkte derart gewählt, dass repräsentative Bereiche hinsichtlich des lokalen Serienwiderstands der Solarzelle durch die gewählten Ortspunkte abgedeckt sind. Insbesondere ist es vorteilhaft, mit Kontaktierungsstrukturen, wie beispielsweise Metallisierungslinien oder Metallisierungsgittern bedeckte Bereiche bei der Wahl der Ortspunkte auszusparen.

Das erfindungsgemäße Verfahren ist insbesondere für Siliziumsolarzellen geeignet, bei denen aufgrund der Material- und/oder Prozessparameter eine örtlich inhomogene Dunkelsättigungsstromdichte vorliegt, wie beispielsweise bei Solarzellen aus multikristallinem Silizium.

Die vorgenannten physikalischen Größen weisen folgende Einheiten auf:

Elektrische Spannungen $V_A$, $V_B$: [V]
Lokale Intensitäten $I_{LA,i}$, $I_{LB,i}$ und $I_{LA,i}$ der Lumineszenzstrahlung: [1] Kalibrierungsparameter $C_{V,i}$: [1]
Skalierungsfaktor f: [A/m$^2$]
Kalibrierungsparameter $m_{V,i}$: [1]

Stromdichten $j_i$, $j_{0i}$ : $[A/m^2]$.

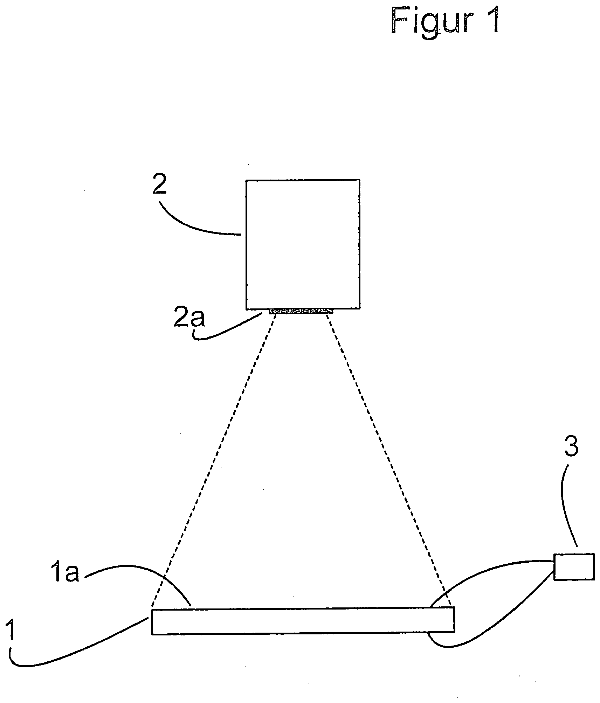

Weitere Merkmale und vorzugsweise Ausgestaltungen des erfindungsgemäßen Verfahrens werden im Folgenden eines Ausführungsbeispiels und der Figur 1 erläutert:

Figur 1 zeigt eine schematische Darstellung eines Messaufbaus zur Ausführung eines Ausführungsbeispiels des erfindungsgemäßen Verfahrens.

Eine multikristalline Siliziumsolarzelle 1 weist an ihrer Vorderseite 1a eine gitterartige metallische Kontaktierungsstruktur und an der gegenüberliegenden Rückseite einen ganzflächigen Rückseitenkontakt auf. Über eine steuerbare Spannungsquelle 3 wird eine Spannung zwischen Vorder- und Rückseitenkontakt der Solarzelle 1 vorgegeben, zur Erzeugung von Elektrolumineszenzstrahlung.

Die von der Vorderseite 1a der Solarzelle 1 ausgehenden Elektrolumineszenzstrahlung wird ortsaufgelöst von einer CCD-Kamera 2 gemessen. Die CCD-Kamera 2 umfasst einen CCD-Chip mit einem quadratischen Raster von Pixeln, wobei jedem Pixel über ein Objektiv 2a ein Ortspunkt auf der Vorderseite 1a der Solarzelle 1 zugeordnet ist.

Der Messaufbau umfasst weiterhin eine nicht dargestellte Steuer- und Auswerteeinheit, welche mit der CCD-Kamera 2 und der Spannungsquelle 3 verbunden ist.

Der gesamte Messvorgang erfolgt im Dunkeln. Zunächst wird eine Messbedingung A erzeugt, in dem zwischen Vorder- und Rückseitenkontakt der Solarzelle 1 eine elektrische Spannung $V_A$ angelegt wird. Die Solarzelle 1 ist eine multikristalline Siliziumsolarzelle mit einer Offenklemmspannung von 620 mV. Die Spannung $V_A$ beträgt 570 mV und ist derart gewählt, dass etwa 20 % des Kurzschlussstromes unter Normbedingungen zwischen Vorder- und Rückseitenkontakt fließen. Hierdurch ist gewährleistet, dass bei Messbedingung A einerseits der Einfluss der lokalen Serienwiderstände vernachlässigbar gering ist und andererseits eine ausreichend hohe Intensität der erzeugten Elektrolumineszenzstrahlung erzielt wird, so dass mit einer Messzeit von etwa 0,25 Sekunden ein ausreichend rauschfreies Messbild der ortsaufgelösten Lumineszenzstrahlung durch die CCD-Kamera 2 zur Messung der lokalen Intensitäten $I_{LA,i}$ aufgenommen wird.

Anschließend wird eine Messbedingung B erzeugt, in dem an den Kontakten der Solarzelle eine elektrische Spannung mittels der Spannungsquelle 3 angelegt wird, die der Offenklemmspannung $V_{oc}$ der Solarzelle entspricht (bei der in diesem Ausführungsbeispiel verwendeten multikristallinen Soliziumsolarzelle ca. $V_{oc}$ = 620 mV). Bei dieser Spannung fließt zwischen den Kontakten der Solarzelle 1 in etwa der Kurzschlussstrom unter Normbedingungen, so dass unter Messbedingung B ein signifikanter Einfluss der lokalen Serienwiderstände vorliegt.

Bei Messbedingung B wird mittels der CCD-Kamera 2 ein Messbild der lokalen Intensitäten $I_{LB,i}$ der von der Solarzelle ausgehenden Lumineszenzstrahlung aufgenommen. Da bei Messbedingung B ein größerer Strom verglichen mit Messbedingung A fließt und entsprechend auch die Intensitäten der Lumineszenzstrahlung größer sind, genügt hierbei eine Messzeit von 0,05 Sekunden.

Da die Solarzelle während der Messungen nicht relativ zur CCD-Kamera 2 bewegt wird, sind auch die Ortspunkte der jeweiligen Messungen identisch.

Entsprechend wird in einem Schritt C für jeden der vermessenen Ortspunkte jeweils ein lokaler Kalibrierungsparameter $C_{V,i}$ gemäß Formel 1 bestimmt. Für jeden Ortspunkt i wird durch Einsetzen der bei Messbedingung A angelegten elektrischen Spannung $V_A$ und der für diesen Ortspunkt bestimmten Intensität der Lumineszenzstrahlung der lokale Kalibrierungsparameter $C_{V,i}$ für diesen Ortspunkt bestimmt. Die thermische Spannung $V_T = kT/q$ (mit der Boltzmannkonstante k und der Elementarladung q) ist hierbei über die bei der Messung vorliegende Temperatur T gegeben, d. h. typischerweise die Umgebungstemperatur des Messaufbaus. Vorzugsweise ist die Messumgebung auf etwa 25°C temperiert.

Anschließend wird für jeden Ortspunkt i der lokale Serienwiderstand gemäß Formel 2 berechnet.

Hierzu wird zunächst die lokale Spannung $V_i$ bestimmt, durch Auflösen der Formel 1 nach $V_i$:

$$V_i = V_T \cdot \ln\left(\frac{I_{LB,i}}{C_{V,i}}\right) \text{ (Fomel 6),}$$

mit der thermischen Spannung $V_T$, der für diesen Ortspunkt unter Messbedingung B gemessenen Intensität der Lumineszenzstrahlung $I_{B,i}$ und dem für diesen Ortpunkt bestimmten lokalen Kalibrierungsparameter $C_{V,i}$.

Die lokale Stromdichte $j_i$ wird für jeden Ortspunkt jeweils gemäß Formel 3 bestimmt mit der wie zuvor beschrieben bestimmten lokalen Spannung $V_i$ und einer lokalen *Dunkelsättigungsstromdichte* $j_{0,i}$.

Die lokale Dunkelsättigungsstromdichte wird gemäß Formel 4 bestimmt, mit dem lokalen Kalibrierungsparameter $C_{V,i}$ und dem globalen Skalierungsfaktor f.

Der globale Skalierungsfaktor f wiederum wird derart bestimmt, dass der Mittelwert der lokalen Serienwiderstände im arithmetischen Mittel dem vorgegebenen globalen Serienwiderstand entspricht:

$$f = \frac{1}{R_{Sg}} \frac{1}{N} \sum_{i=1}^{N} \frac{V_i - V_B}{C_{V,i}^{-1} \exp(V_i / V_T)} \quad \text{(Formel 7)}$$

mit der Gesamtanzahl N der vorgegebenen Ortspunkte, dem vorgegebenen globalen Serienwiderstand $R_{Sg}$, der für den jeweiligen Ortspunkt $i$ wie zuvor beschrieben berechneten lokalen Spannung $V_i$, der unter Messbedingung B an den Kontakten der Solarzelle angelegten Spannung $V_B$, dem für den jeweiligen Ortspunkt i bestimmten lokalen Kalibrierungsparameter $C_{V,i}$ und der thermischen Spannung $V_T$.

Der globale Serienwiderstand $R_{Sg}$ der Solarzelle 1 wurde hierbei im Vorfeld durch Messung und Vergleich von Hell- und Dunkelkennlinie der Solarzelle 1 und Bestimmung des globalen Serienwiderstands in an sich bekannter Weise ermittelt (wie in A. G. Aberle, S. R. Wenham, and M. A. Green, in A new method for accurate measurements of the lumped series resistance of solar cells, Louisville, Kentucky, USA, 1993 (IEEE; New York, NY, USA), p. 133-9. beschrieben).

**Patentansprüche**

1. Verfahren zur ortsaufgelösten Bestimmung des Serienwiderstandes einer Halbleiterstruktur, welche eine Solarzelle (1) oder eine Vorstufe einer Solarzelle (1) ist, umfassend mindestens einen pn-Übergang und Kontakte zur elektrischen Kontaktierung der Halbleiterstruktur,
   wobei das Verfahren folgende Verfahrensschritte umfasst:

   A Erzeugen von Lumineszenzstrahlung in der Halbleiterstruktur unter einer Messbedingung A, bei welcher zwischen den Kontakten der Halbleiterstruktur eine elektrische Spannung $V_A$ besteht und für mehrere Ortspunkte der Halbleiterstruktur jeweils Messen einer lokalen Intensität $I_{LA,i}$ der von diesem Ortspunkt ausgehenden Lumineszenzstrahlung,
   B Erzeugen von Lumineszenzstrahlung in der Halbleiterstruktur unter einer Messbedingung B, bei welcher zwischen den Kontakten der Halbleiterstruktur eine elektrische Spannung $V_B$ besteht und für mehrere Ortspunkte Messen jeweils lokalen Intensitäten $I_{LB,i}$ der von diesem Ortspunkt der Halbleiterstruktur ausgehenden Lumineszenzstrahlung, wobei bei der Messbedingung B ein größerer Strom zwischen den Kontakten der Halbleiterstruktur fließt als bei der Messbedingung A,
   C für mehrere vorgegebene Ortspunkte der Halbleiterstruktur Bestimmen eines lokalen Kalibrierungsparameters $C_{V,i}$ für einen vorgegebenen mathematischen Zusammenhang zwischen der lokalen Intensität der Lumineszenzstrahlung und der lokal an dem Halbleiterelement anliegenden Spannung an dem Ortspunkt, wobei die Bestimmung der lokalen Kalibrierungsparameter $C_{V,i}$ zumindest abhängig von den in Schritt A gemessenen Intensitäten $I_{LA,i}$ der Lumineszenzstrahlung und der bei Messbedingung A zwischen den Kontakten der Halbleiterstruktur bestehenden Spannung $V_A$ erfolgt und
   D Bestimmung von lokalen Serienwiderständen $R_{S,i}$ für mehrere vorgegebene Ortspunkte der Halbleiterstruktur jeweils zumindest abhängig von mindestens einer in Schritt B gemessenen lokalen Intensität $I_{LB,i}$ der Lumineszenzstrahlung und mindestens einem in Schritt C bestimmten lokalen Kalibrierungsparameter $C_{V,i}$, derart, dass in Schritt D die lokalen Serienwiderstände $R_{S,i}$ jeweils zusätzlich abhängig von einem für alle lokalen Serienwiderstände identisch vorgegebenen globalen Serienwiderstand $R_{Sg}$ der Halbleiterstruktur bestimmt werden,

   **dadurch gekennzeichnet,**
   **dass** in Schritt D die lokalen Serienwiderstände $R_{S,i}$ jeweils mit einem für alle lokalen Serienwiderstände identischen globalen Skalierungsfaktor f skaliert werden, wobei der globale Skalierungsfaktor f derart bestimmt wird, dass die lokalen Serienwiderstände $R_{S,i}$ ein vorgegebenes mathematisches Verhältnis zu dem globalen Serienwiderstand $R_{Sg}$ aufweisen.

2. Verfahren nach Anspruch 1,
   **dadurch gekennzeichnet**,
   der globale Skalierungsfaktor f derart bestimmt wird, dass eine vorgegebene Mittelung der lokalen Serienwiderstände $R_{S,i}$, vorzugsweise das arithmetische Mittel, gleich dem globalen Serienwiderstand $R_{Sg}$ ist.

3. Verfahren nach mindestens einem der vorangegangenen Ansprüche, **dadurch gekennzeichnet,**
**dass** bei Messbedingung A die Halbleiterstruktur an den elektrischen Kontakten mit der Spannung $V_A$ und bei Messbedingung B mit der Spannung $V_B$ beaufschlagt wird und bei beiden Messbedingung die Halbleiterstruktur nicht oder nur geringfügig mit elektromagnetischer Strahlung beaufschlagt wird, so dass der in der Halbleiterstruktur fließende Strom im Wesentlichen durch die jeweils anliegende Spannung verursacht ist und
**dass** $V_A$ kleiner als $V_B$ ist.

4. Verfahren nach Anspruch 3,
**dadurch gekennzeichnet,**
**dass** bei Messung der Intensität $I_{LA}$ in Schritt A die Messzeit mindestens um einen Faktor 3, vorzugsweise etwa um einen Faktor 5 größer ist als die Messzeit bei Messung der Intensität $I_{LB}$ in Schritt B.

5. Verfahren mindestens nach einem der vorangegangenen Ansprüche,
**dadurch gekennzeichnet,**
**dass** bei Messbedingung A ein Strom zwischen den Kontakten der Halbleiterstruktur fließt, der weniger als 30%, vorzugsweise weniger als 20%, im Weiteren vorzugsweise weniger als 15% des unter Normbedingungen der Halbleiterstruktur fließenden Kurzschlussstromes beträgt.

6. Verfahren nach mindestens einem der vorangegangenen Ansprüche,
**dadurch gekennzeichnet,**
**dass** bei Messbedingung B ein Strom zwischen den Kontakten der Halbleiterstruktur fließt, der mindestens 50%, vorzugsweise mindestens 70%, im Weiteren vorzugsweise in etwa 100% des unter Normbedingung der Halbleiterstruktur fließenden Kurzschlussstromes beträgt.

7. Verfahren nach mindestens einem der vorangegangenen Ansprüche,
**dadurch gekennzeichnet,**
**dass** in Schritt C ein exponentieller Zusammenhang zwischen der Intensität der lokalen Lumineszenzstrahlung $I_{LA,i}$ und der Spannung $V_A$ vorgegeben ist,
vorzugsweise gemäß Formel 1:

$$I_{LA,i} = C_{V,i}\, exp\left(\frac{V_A}{V_T}\right) \qquad \text{(Formel 1)},$$

mit dem in Schritt C zu bestimmenden lokalen Kalibrierungsparametern $C_{V,i}$ und der thermischen Spannung $V_T$.

8. Verfahren nach mindestens einem der vorangegangenen Ansprüche,
**dadurch gekennzeichnet,**
**dass** in Schritt D jeder lokale Serienwiderstand gemäß Formel 2

$$R_{S,i} = \frac{V_B - V_i}{j_i} \qquad \text{(Formel 2)}$$

bestimmt wird, mit einer lokalen Spannung $V_i$ und einer lokalen Stromdichte $j_i$, wobei die lokale Spannung abhängig zumindest von der in Schritt B gemessenen lokalen Intensität $I_{B,i}$ und dem in Schritt B bestimmten lokalen Kalibrierungsparameter $C_{V,i}$ bestimmt wird und die lokale Stromdichte $j_i$ gemäß Formel 3

$$j_i = j_{o,i}\, exp\left(\frac{V_i}{V_T}\right) \qquad \text{(Formel 3)}$$

bestimmt wird, mit der lokalen Spannung $V_i$, der thermischen Spannung $V_T$ und einer lokalen Dunkelsättigungsstromdichte $j_{0,i}$.

9. Verfahren mindestens nach Anspruch 8 und Anspruch 1,

**dadurch gekennzeichnet,**
**dass** die lokale Dunkelsättigungsstromdichte $j_{0,i}$ gemäß Formel 4

$$j_{0,i} = \frac{f}{C_{V,i}} \quad \text{(Formel 4)}$$

bestimmt wird, mit dem lokalen Kalibrierungsparameter $C_{V,i}$ und dem globalen Skalierungsfaktor f.

**10.** Verfahren nach mindestens einem der vorangegangenen Ansprüche,
**dadurch gekennzeichnet,**
**dass** in Schritt A zusätzlich mindestens ein Erzeugen von Lumineszenzstrahlung in der Halbleiterstruktur unter einer zweiten Messbedingung A' erfolgt, bei welcher zwischen den Kontakten der Halbleiterstruktur eine elektrische Spannung $V_A'$ besteht und für mehrere Ortspunkte der Halbleiterstruktur jeweils eine lokale Intensität $I_{LA,i}'$ der von diesem Ortspunkt ausgehenden Lumineszenzstrahlung gemessen wird, wobei bei Messbedingung A' ein zu Messbedingung A unterschiedlicher Strom zwischen den Kontakten der Halbleiterstruktur fließt und
**dass** in Schritt C ein exponentieller Zusammenhang zwischen der Intensität der lokalen Lumineszenzstrahlung $I_{LA,i}$ und der Spannung $V_A$ gemäß Formel 5 vorgegeben ist:

$$I_{LA,i} = C_{V,i}\, \mathrm{e}\, xp\!\left(\frac{V_A}{m_{V,i} \cdot V_T}\right) \qquad \text{(Formel 5)},$$

mit der thermischen Spannung $V_T$ und den lokalen Kalibrierungsparametern $C_{V,i}$ und $m_{V,i}$,
in Schritt C abhängig von den gemessenen Intensitäten $I_{LA,i}$ und $I_{LA,i}'$ die lokalen Kalibrierungsparameter $C_{V,i}$ und $m_{V,i}$ bestimmt werden und
in Schritt D die lokalen Serienwiderstände $R_{S,i}$ jeweils zusätzlich abhängig von dem lokalen Kalibrierungsparameter $m_{V,i}$ bestimmt werden.

**Claims**

1. Method for the spatially resolved determination of the series resistance of a semiconductor structure, which is a solar cell (1) or a stage preliminary to a solar cell (1), comprising at least one pn-junction and contacts for electrically contacting the semiconductor structure,
the method comprising the following method steps:

   A generation of luminescent radiation in the semiconductor structure under a measurement condition A in which there is an electrical voltage $V_A$ between the contacts of the semiconductor structure and, for each of a plurality of locations of the semiconductor structure, measurement of a local intensity $I_{LA,i}$ of the luminescent radiation emanating from that location,
   B generation of luminescent radiation in the semiconductor structure under a measurement condition B in which there is an electrical voltage $V_B$ between the contacts of the semiconductor structure and, for each of a plurality of locations, measurement of local intensities $I_{LB,i}$ of the luminescent radiation emanating from that location of the semiconductor structure, wherein in the case of measurement condition B a larger current flows between the contacts of the semiconductor structure than in the case of measurement condition A,
   C for a plurality of specified locations of the semiconductor structure, determination of a local calibration parameter $C_{V,i}$ for a specified mathematical relationship between the local intensity of the luminescent radiation and the voltage applied locally to the semiconductor element at the location, the determination of the local calibration parameters $C_{V,i}$ being effected at least in dependence upon the intensities $I_{LA,i}$ of the luminescent radiation measured in step A and the voltage $V_A$ between the contacts of the semiconductor structure in the case of measurement condition A and
   D determination of local series resistances $R_{S,i}$ for a plurality of specified locations of the semiconductor structure in each case at least in dependence upon at least one local intensity $I_{LB,i}$ of the luminescent radiation measured in step B and at least one local calibration parameter $C_{V,i}$ determined in step C in such a way that in step D the local series resistances $R_{S,i}$ are each additionally determined in dependence upon a global series resistance $R_{Sg}$ of the semiconductor structure that is identically specified for all local series resistances,

**characterised in that**

in step D the local series resistances $R_{S,i}$ are each scaled with a global scaling factor $f$ that is identical for all local series resistances, the global scaling factor $f$ being determined in such a way that the local series resistances $R_{S,i}$ have a specified mathematical relationship to the global series resistance $R_{Sg}$.

2. Method according to claim 1,
   **characterised in that**
   the global scaling factor f is determined in such a way that a specified averaging of the local series resistances $R_{S,i}$, preferably the arithmetic mean, is equal to the global series resistance $R_{Sg}$.

3. Method according to at least one of the preceding claims,
   **characterised in that**
   in the case of measurement condition A the semiconductor structure is at the electrical contacts subjected to the voltage $V_A$ and in the case of measurement condition B to the voltage $V_B$ and in the case of both measurement conditions the semiconductor structure is not subjected to electromagnetic radiation or is subjected thereto only to an insignificant extent, so that the current flowing in the semiconductor structure is essentially brought about by the respectively applied voltage and $V_A$ is lower than $V_B$.

4. Method according to claim 3,
   **characterised in that**
   in the case of the measurement of the intensity $I_{LA}$ in step A, the measurement time is greater at least by a factor of 3, preferably approximately by a factor of 5, than the measurement time in the case of the measurement of the intensity $I_{LB}$ in step B.

5. Method at least according to one of the preceding claims,
   **characterised in that**
   in the case of measurement condition A, a current flows between the contacts of the semiconductor structure that is less than 30 %, preferably less than 20 %, further preferably less than 15 %, of the short-circuit current that flows under normal conditions of the semiconductor structure.

6. Method according to at least one of the preceding claims,
   **characterised in that**
   in the case of measurement condition B, a current flows between the contacts of the semiconductor structure that is at least 50 %, preferably at least 70 %, further preferably approximately 100 %, of the short-circuit current that flows under normal conditions of the semiconductor structure.

7. Method according to at least one of the preceding claims,
   **characterised in that**
   in step C, an exponential relationship between the intensity of the local luminescent radiation $I_{LA,i}$ and the voltage $V_A$ is specified,
   preferably in accordance with formula 1:

$$I_{LA,i} = C_{V,i}\, exp\left(\frac{V_A}{V_T}\right) \qquad \text{(formula 1)},$$

with the local calibration parameter $C_{V,i}$ to be determined in step C and
with the thermal voltage $V_T$.

8. Method according to at least one of the preceding claims, **characterised in that**
   in step D, each local series resistance is determined in accordance with formula 2

$$R_{S,i} = \frac{V_B - V_i}{j_i} \qquad \text{(formula 2)},$$

with a local *voltage $V_i$* and a local current density $j_i$, wherein the local voltage is determined in dependence upon at least the local intensity $I_{B,i}$ measured in step B and the local calibration parameter $C_{V,i}$ determined in step B, and the local current density $j_i$ is determined in accordance with formula 3

$$j_i = j_{0,i}\, exp\!\left(\frac{V_i}{V_T}\right) \qquad\text{(formula 3),}$$

with the local voltage $V_i$, the thermal voltage $V_T$ and a local dark saturation current density $j_{0,i}$.

**9.** Method according to claim 8 and claim 1,
**characterised in that**
the local dark saturation current density $j_{0,i}$ is determined in accordance with formula 4,

$$j_{0,i} = \frac{f}{C_{V,i}} \qquad\text{(formula 4),}$$

with the local calibration parameter $C_{V,i}$ and with the global scaling factor f.

**10.** Method according to at least one of the preceding claims,
**characterised in that**
in step A, in addition at least one generation of luminescent radiation in the semiconductor structure is effected under a measurement condition A' in which there is an electrical voltage $V_A'$ between the contacts of the semiconductor structure and, for each of a plurality of locations of the semiconductor structure, a local intensity $I_{LA,i}'$ of the luminescent radiation emanating from that location is measured, wherein in the case of measurement condition A' a current different from measurement condition A flows between the contacts of the semiconductor structure and in step C, an exponential relationship between the intensity of the local luminescent radiation $I_{LA,i}$ and the voltage $V_A$ is specified in accordance with formula 5:

$$I_{LA,i} = C_{V,i}\, exp\!\left(\frac{V_A}{m_{V,i} \cdot V_T}\right) \qquad\text{(formula 5),}$$

with the thermal voltage $V_T$ and with the local calibration parameters $C_{V,i}$ and $m_{V,i}$,
in step C, the local calibration parameters $C_{V,i}$ and $m_{V,i}$ are determined in dependence upon the measured intensities $I_{LA,i}$ and $I_{LA,i}'$, and
in step D, the local series resistances $R_{S,i}$ are each additionally determined in dependence upon the local calibration parameter $m_{V,i}$.

**Revendications**

**1.** Procédé de détermination à résolution locale de la résistance série d'une structure semi-conductrice, laquelle est une cellule solaire (1) ou un précurseur d'une cellule solaire (1), comprenant au moins une jonction pn et des contacts pour la mise en contact électrique de la structure semi-conductrice, le procédé comprenant les étapes suivantes :

A génération d'un rayonnement de luminescence dans la structure semi-conductrice dans une condition de mesure A, dans laquelle il existe une tension électrique $V_A$ entre les contacts de la structure semi-conductrice, et mesure, pour plusieurs points locaux de la structure semi-conductrice, d'une intensité locale $I_{LA,i}$ respective du rayonnement de luminescence provenant de ce point local,
B génération d'un rayonnement de luminescence dans la structure semi-conductrice dans une condition de mesure B, dans laquelle il existe une tension électrique $V_B$ entre les contacts de la structure semi-conductrice, et mesure, pour plusieurs points locaux, d'intensités locales $I_{LB,i}$ respectives du rayonnement de luminescence provenant de ce point local de la structure semi-conductrice, un courant plus élevé circulant entre les contacts de la structure semi-conductrice dans la condition de mesure B que dans la condition de mesure A,
C détermination, pour plusieurs points locaux prédéfinis de la structure semi-conductrice, d'un paramètre d'étalonnage local $C_{V,i}$ pour une relation mathématique prédéfinie entre l'intensité locale du rayonnement de luminescence et la tension existant localement sur l'élément semiconducteur au point local, la détermination du paramètre d'étalonnage local $C_{V,i}$ ayant lieu au moins en fonction des intensités $I_{LA,i}$ du rayonnement de luminescence mesurées à l'étape A et de la tension $V_A$ existant entre les contacts de la structure semi-conductrice dans la condition de mesure A et

D détermination de résistances série locales $R_{S,i}$ pour plusieurs points locaux prédéfinis de la structure semi-conductrice chaque fois au moins en fonction d'une intensité locale $I_{LA,i}$ du rayonnement de luminescence mesurée à l'étape B et d'au moins un paramètre d'étalonnage local $C_{V,i}$ déterminé à l'étape C de telle sorte qu'à l'étape D, les résistances série locales $R_{S,i}$ soient chaque fois déterminées en plus en fonction d'une résistance série globale $R_{Sg}$ prédéfinie, identique pour toutes les résistances série locales, de la structure semi-conductrice,

**caractérisé en ce**
**qu'**à l'étape D, les résistances série locales $R_{S,i}$ sont chaque fois mises à l'échelle avec un facteur d'échelle global *f* identique pour toutes les résistances série locales, le facteur d'échelle global *f* étant déterminé de telle sorte que les résistances série locales $R_{S,i}$ présentent un rapport mathématique prédéfini avec la résistance série globale $R_{Sg}$.

2. Procédé selon la revendication 1,
**caractérisé en ce**
**que** le facteur d'échelle global *f* est déterminé de telle sorte qu'une moyenne prédéfinie des résistances série locales $R_{S,i}$, de préférence la moyenne arithmétique, soit égale à la résistance série globale $R_{Sg}$.

3. Procédé selon au moins l'une des revendications précédentes,
**caractérisé en ce**
**que** dans la condition de mesure A, la structure semi-conductrice est soumise à la tension $V_A$ et dans la condition de mesure B à la tension $V_B$ aux contacts électriques et que, dans les deux conditions de mesure, la structure semi-conductrice n'est pas ou est seulement faiblement exposée à un rayonnement électromagnétique, de sorte que le courant circulant dans la structure semi-conductrice est produit sensiblement par la tension respectivement appliquée et *que* $V_A$ est inférieure à $V_B$.

4. Procédé selon la revendication 3,
**caractérisé en ce**
**que** lors de la mesure de l'intensité $I_{LA}$ à l'étape A, le temps de mesure est supérieur d'au moins un facteur 3, de préférence notamment d'un facteur 5 au temps de mesure lors de la mesure de l'intensité $I_{LB}$ à l'étape B.

5. Procédé selon au moins l'une des revendications précédentes,
**caractérisé en ce**
**que** dans la condition de mesure A, le courant qui circule entre les contacts de la structure semi-conductrice est inférieur à 30 %, de préférence inférieur à 20 %, davantage de préférence inférieur à 15 % du courant de court-circuit qui circule dans les conditions normales de la structure semi-conductrice.

6. Procédé selon au moins l'une des revendications précédentes,
**caractérisé en ce**
**que** dans la condition de mesure B, le courant qui circule entre les contacts de la structure semi-conductrice est égal à au moins 50 %, de préférence à au moins 70 %, davantage de préférence à environ 100 % du courant de court-circuit qui circule dans les conditions normales de la structure semi-conductrice.

7. Procédé selon au moins l'une des revendications précédentes,
**caractérisé en ce**
**qu'**à l'étape C, une relation exponentielle entre l'intensité du rayonnement de luminescence local $I_{LA,i}$ et la tension $V_A$ est prédéfinie,
de préférence selon la formule 1 :

$$I_{LA,i} = C_{V,i} \, exp\left(\frac{V_A}{V_T}\right) \quad \text{(formule 1),}$$

avec le paramètre d'étalonnage local $C_{V,i}$ à déterminer à l'étape C et la tension thermique $V_T$.

8. Procédé selon au moins l'une des revendications précédentes,
**caractérisé en ce**
**qu**'à l'étape D, chaque résistance série locale est déterminée selon la formule 2 :

$$R_{S,i} = \frac{V_B - V_i}{j_i}$$ (formule 2)

avec une tension *locale* $V_i$ et une densité de courant locale $j_i$, la tension locale étant déterminée en fonction au moins de l'intensité locale $I_{B,i}$ mesurée à l'étape B et du paramètre d'étalonnage local $C_{V,i}$ déterminé à l'étape B et la densité de courant locale $j_i$ étant déterminée selon la formule 3 :

$$j_i = j_{o,i} \exp\left(\frac{V_i}{V_T}\right)$$ (formule 3)

avec la tension locale $V_i$, la tension thermique $V_T$ et une densité de courant de saturation dans l'obscurité locale $j_{0,i}$.

9. Procédé selon au moins la revendication 8 et la revendication 1,
**caractérisé en ce**
**que** la densité de courant de saturation dans l'obscurité locale $j_{0,i}$ est déterminée selon la formule 4 :

$$j_{0,i} = \frac{f}{C_{V,i}}$$ (formule 4)

avec le paramètre d'étalonnage local $C_{V,i}$ et le facteur d'échelle global $f$.

10. Procédé selon au moins l'une des revendications précédentes,
**caractérisé en ce**
**qu**'à l'étape A, au moins une génération d'un rayonnement de luminescence dans la structure semi-conductrice a lieu en plus dans une deuxième condition de mesure A', dans laquelle il existe une tension électrique $V_{A'}$ entre les contacts de la structure semi-conductrice et, pour plusieurs points locaux de la structure semi-conductrice, une intensité locale $I_{LA,i'}$ respective du rayonnement de luminescence provenant de ce point local est mesurée, le courant circulant entre les contacts de la structure semi-conductrice étant différent dans la condition de mesure A' que dans la condition de mesure A et
**qu**'à l'étape C, une relation exponentielle entre l'intensité du rayonnement de luminescence local $I_{LA,i}$ et la tension $V_A$ *est* prédéfinie selon la formule 5 :

$$I_{LA,i} = C_{V,i}\, exp\left(\frac{V_A}{m_{V,i} \cdot V_T}\right)$$ (formule 5)

avec la tension thermique $V_T$ et les paramètres d'étalonnage locaux $C_{V,i}$ et $m_{V,i}$,
les paramètres d'étalonnage locaux $C_{V,i}$ et $m_{V,i}$ étant déterminés à l'étape C en fonction des intensités $I_{LA,i}$ et $I_{LA,i'}$ mesurées et
les résistances série locales $R_{S,i}$ respectives étant déterminées en plus à l'étape D en fonction du paramètre d'étalonnage local $m_{V,i}$.

# Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. TRUPKE ; E. PINK ; R. A. BARDOS ; M. D: ABBOTT.** Spatially resolved series resistance of silicon solar cells obtained from luminescence imaging. *Applied Physics Letters,* 2007, vol. 90, 093506
- **D. PYSCH ; A. METTE ; S. W. GLUNZ.** *Solar Energy Materials & Solar Cells,* 2007, vol. 91, 1698-706

- **A. G. ABERLE ; S. R. WENHAM ; M. A. GREEN.** A new method for accurate measurements of the lumped series resistance of solar cells. IEEE, 1993, 133-9